# EUROPEAN PATENT APPLICATION

(11) **EP 4 443 928 A1**
(43) Date of publication of application: **09.10.2024**
(21) Application number: 22914547.9
(22) Date of filing: 23.12.2022
(51) Int. Cl.: H04W 12/069

(54) **COMMUNICATION METHOD AND COMMUNICATION APPARATUS**

(30) Priority: 29.12.2021 CN 202111639208
(71) Applicant: Huawei Technologies Co., Ltd., Shenzhen, Guangdong 518129 (CN)
(72) Inventor: JIANG, Keng, Shenzhen, Guangdong 518129 (CN)
(74) Representative: Thun, Clemens
(86) International application number: PCT/CN2022/141451
(87) International publication number: WO 2023/125293

(57) **Abstract**

This application provides a communication method and a communication apparatus. The method includes: receiving a first message from a first device, where the first message includes a certificate request file, and the certificate request file is used to apply for a digital certificate of the AAU; sending a second message to a certificate authority CA server based on the first message, where the second message includes the certificate request file; receiving a digital certificate from the CA server; and sending the digital certificate to the AAU. In this application, a second device (for example, a BBU) acts as a proxy for the first device (for example, the AAU) to apply to the CA server for the digital certificate, so that the digital certificate can be updated or managed.

## Description

This application claims priority to Chinese Patent Application No. 202111639208.4, filed with the China National Intellectual Property Administration on December 29, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A digital certificate is a file that is digitally signed by a certificate authority (certificate authority, CA) server and that includes information about an owner of a public key and the public key. The CA server is an authoritative and fair third-party authority. Therefore, the digital certificate is applied to a device in a communication system, so that the device can establish a secure transmission channel and perform identity authentication based on the certificate issued by the CA server. In a new radio (new radio, NR) system, a base station includes a first device and a second device. For example, the first device is an active antenna unit (active antenna unit, AAU), and the second device is a baseband unit (baseband unit, BBU). As the AAU and the BBU communicate with each other through an enhanced common public radio interface (enhanced common public radio interface, eCPRI), the AAU and the BBU need to use a digital certificate to implement secure eCPRI communication. However, because there is no direct channel between the AAU and the CA server, the AAU cannot update or manage the digital certificate.

### SUMMARY

This application provides a communication method and a communication apparatus, to update or manage a digital certificate.

According to a first aspect, this application provides a communication method. The method is applicable to a second device, and the method includes:
receiving a first message from a first device, where the first message includes a certificate request file, and the certificate request file is used to apply for a digital certificate of the first device;
sending a second message to a certificate authority CA server based on the first message, where the second message includes the certificate request file;
receiving the digital certificate from the CA server; and
sending the digital certificate to the first device.

In this application, an AAU does not need to establish a transmission network with a CA server, and applies for a digital certificate from the CA server via a first device (for example, a BBU) as a proxy for a second device (for example, the AAU), so that the digital certificate can be updated or managed.

In a possible implementation, the sending a second message to a CA server based on the first message includes:
sending a third message to the first device, where the third message includes the certificate request file;
receiving, from the first device, first signature data corresponding to the third message; and
sending the second message to the CA server, where the second message includes the first signature data and the third message.

In this application, in an asynchronous remote signature manner, to be specific, in a manner in which the second device sends to-be-signed data (for example, the third message) to the first device, and receives signature data (for example, the first signature data) fed back by the first device, security of a proxy process can be ensured, and it is ensured that a private key of the AAU is not transferred on a network and is not leaked.

In a possible implementation, the receiving the digital certificate from the CA server includes:
receiving a first response from the CA server for the second message, where the first response includes the digital certificate.

In a possible implementation, the first response carries signature data of the first response, and the sending the digital certificate to the first device includes:
sending first acknowledgment information to the CA server based on a check result of checking the first response based on the signature data of the first response;
receiving second acknowledgment information from the CA server for the first acknowledgment information; and
sending the digital certificate to the first device in response to the second acknowledgment information.

In a possible implementation, the sending first acknowledgment information to the CA server based on a check result of checking the first response based on the signature data of the first response includes:
when the check result is that the check succeeds, sending the first acknowledgment information to the first device;
receiving, from the first device, second signature data corresponding to the first acknowledgment information; and
sending the first acknowledgment information and the second signature data to the CA server.

In this application, in an asynchronous remote signature manner, to be specific, in a manner in which the second device sends to-be-signed data (for example, the first acknowledgment information) to the first device, and receives signature data (for example, the second signature data) fed back by the first device, security of a proxy process can be ensured, and it is ensured that the private key of the AAU is not transferred on the network and is not leaked.

According to a second aspect, this application provides a communication method. The method is applicable to a first device, and the method includes:
sending a first message to a second device, where the first message includes a certificate request file, and the certificate request file is used to apply for a digital certificate of the first device; and
receiving the digital certificate from the second device.

In a possible implementation, the method further includes:
receiving a third message from the second device, where the third message includes the certificate request file; and
sending first signature data corresponding to the third message to the second device.

In a possible implementation, the method further includes:
receiving first acknowledgment information from the second device; and
sending second signature data corresponding to the first acknowledgment information to the second device.

According to a third aspect, this application provides a communication method. The method is applicable to a CA server, and the method includes:
receiving a second message from a second device, where the second message includes a certificate request file, and the certificate request file is used to apply for a digital certificate of a first device; and
sending the digital certificate to the second device.

In a possible implementation, the second message includes first signature data corresponding to a third message and the third message, and the third message includes the certificate request file.

In a possible implementation, the sending the digital certificate to the second device includes:
sending a first response for the second message to the second device, where the first response includes the digital certificate.

In a possible implementation, the first response carries signature data of the first response, and the method further includes:
receiving first acknowledgment information from the second device, where the first acknowledgment information is generated based on a check result of checking the first response by the second device based on the signature data of the first response; and
sending second acknowledgment information for the first acknowledgment information to the second device.

In a possible implementation, the first acknowledgment information further carries second signature data corresponding to the first acknowledgment information.

According to a fourth aspect, this application provides a communication apparatus. The apparatus may be a second device. The apparatus includes:
a transceiver unit, configured to receive a first message from a first device, where the first message includes a certificate request file, and the certificate request file is used to apply for a digital certificate of the first device; and
a processing unit, configured to send, based on the first message, a second message to a certificate authority CA server via the transceiver unit, where the second message includes the certificate request file, where
the transceiver unit is configured to receive the digital certificate from the CA server; and
the transceiver unit is configured to send the digital certificate to the first device.

In a possible implementation, the processing unit is specifically configured to:
send a third message to the first device via the transceiver unit, where the third message includes the certificate request file;
receive, from the first device via the transceiver unit, first signature data corresponding to the third message; and
send the second message to the CA server via the transceiver unit, where the second message includes the first signature data and the third message.

In a possible implementation, the transceiver unit is specifically configured to:
receive a first response from the CA server for the second message, where the first response includes the digital certificate.

In a possible implementation, the first response carries signature data of the first response, and the transceiver unit is specifically configured to:
send first acknowledgment information to the CA server based on a check result of checking the first response based on the signature data of the first response;
receive second acknowledgment information from the CA server for the first acknowledgment information; and
send the digital certificate to the first device in response to the second acknowledgment information.

In a possible implementation, the transceiver unit is specifically configured to:
when the check result is that the check succeeds, send the first acknowledgment information to the first device;
receive, from the first device, second signature data corresponding to the first acknowledgment information; and
send the first acknowledgment information and the second signature data to the CA server.

According to a fifth aspect, this application provides a communication apparatus. The apparatus may be a first device. The apparatus includes:
a transceiver unit, configured to send a first message to a second device, where the first message includes a certificate request file, and the certificate request file is used to apply for a digital certificate of the first device, where
the transceiver unit is configured to receive the digital certificate from the second device.

In a possible implementation, the transceiver unit is configured to receive a third message from the second device, where the third message includes the certificate request file; and
the apparatus further includes:
a processing unit, configured to send first signature data corresponding to the third message to the second device via the transceiver unit.

In a possible implementation, the transceiver unit is specifically configured to:
receive first acknowledgment information from the second device; and
send second signature data corresponding to the first acknowledgment information to the second device.

According to a sixth aspect, this application provides a communication apparatus. The apparatus is a CA server. The apparatus includes:
a transceiver unit, configured to receive a second message from a second device, where the second message includes a certificate request file, and the certificate request file is used to apply for a digital certificate of a first device, where
the transceiver unit is further configured to send the digital certificate to the second device.

In a possible implementation, the second message includes first signature data corresponding to a third message and the third message, and the third message includes the certificate request file.

In a possible implementation, the transceiver unit is further configured to:
send a first response for the second message to the second device, where the first response includes the digital certificate.

In a possible implementation, the first response carries signature data of the first response, and the transceiver unit is further configured to:
receive first acknowledgment information from the second device, where the first acknowledgment information is generated based on a check result of checking the first response by the second device based on the signature data of the first response; and
send second acknowledgment information for the first acknowledgment information to the second device.

In a possible implementation, the first acknowledgment information further carries second signature data corresponding to the first acknowledgment information.

According to a seventh aspect, this application provides a communication apparatus. The apparatus may be a second device, an apparatus in a second device, or an apparatus that can be used together with a second device. Alternatively, the communication apparatus may be a chip system. The communication apparatus may perform the method according to the first aspect. Functions of the communication apparatus may be implemented by hardware, or may be implemented by hardware executing corresponding software. The hardware or the software includes one or more units or modules corresponding to the foregoing functions. The unit or the module may be software and/or hardware. For operations performed by the communication apparatus and beneficial effects thereof, refer to the method according to the first aspect and beneficial effects thereof. Repeated parts are not described again.

According to an eighth aspect, this application provides a communication apparatus. The apparatus may be a first device, an apparatus in a first device, or an apparatus that can be used together with a first device. Alternatively, the communication apparatus may be a chip system. The communication apparatus may perform the method according to the second aspect. Functions of the communication apparatus may be implemented by hardware, or may be implemented by hardware executing corresponding software. The hardware or the software includes one or more units or modules corresponding to the foregoing functions. The unit or the module may be software and/or hardware. For operations performed by the communication apparatus and beneficial effects thereof, refer to the method according to the second aspect and beneficial effects thereof. Repeated parts are not described again.

According to a ninth aspect, this application provides a communication apparatus. The apparatus may be a CA server, an apparatus in a CA server, or an apparatus that can be used together with a CA server. Alternatively, the communication apparatus may be a chip system. The communication apparatus may perform the method according to the third aspect. Functions of the communication apparatus may be implemented by hardware, or may be implemented by hardware executing corresponding software. The hardware or the software includes one or more units or modules corresponding to the foregoing functions. The unit or the module may be software and/or hardware. For operations performed by the communication apparatus and beneficial effects thereof, refer to the method according to the third aspect and beneficial effects thereof. Repeated parts are not described again.

According to a tenth aspect, this application provides a communication apparatus. The apparatus may be a second device, and the communication apparatus includes a processor and a transceiver. The processor and the transceiver are configured to execute a computer program or instructions stored in at least one memory, to enable the apparatus to implement the method according to any one of the possible implementations of the first aspect.

According to an eleventh aspect, this application provides a communication apparatus. The apparatus may be a second device, and the communication apparatus includes a processor, a transceiver, and a memory. The processor, the transceiver, and the memory are coupled. The processor and the transceiver are configured to implement the method according to any one of the possible implementations of the first aspect.

According to a twelfth aspect, this application provides a communication apparatus. The apparatus may be a first device, and the communication apparatus includes a processor and a transceiver. The processor and the transceiver are configured to execute a computer program or instructions stored in at least one memory, to enable the apparatus to implement the method according to any one of the possible implementations of the second aspect.

According to a thirteenth aspect, this application provides a communication apparatus. The apparatus may be a first device, and the communication apparatus includes a processor, a transceiver, and a memory. The processor, the transceiver, and the memory are coupled. The processor and the transceiver are configured to implement the method according to any one of the possible implementations of the second aspect.

According to a fourteenth aspect, this application provides a communication apparatus. The apparatus may be a CA server, and the communication apparatus includes a processor and a transceiver. The processor and the transceiver are configured to execute a computer program or instructions stored in at least one memory, to enable the apparatus to implement the method according to any one of the possible implementations of the third aspect.

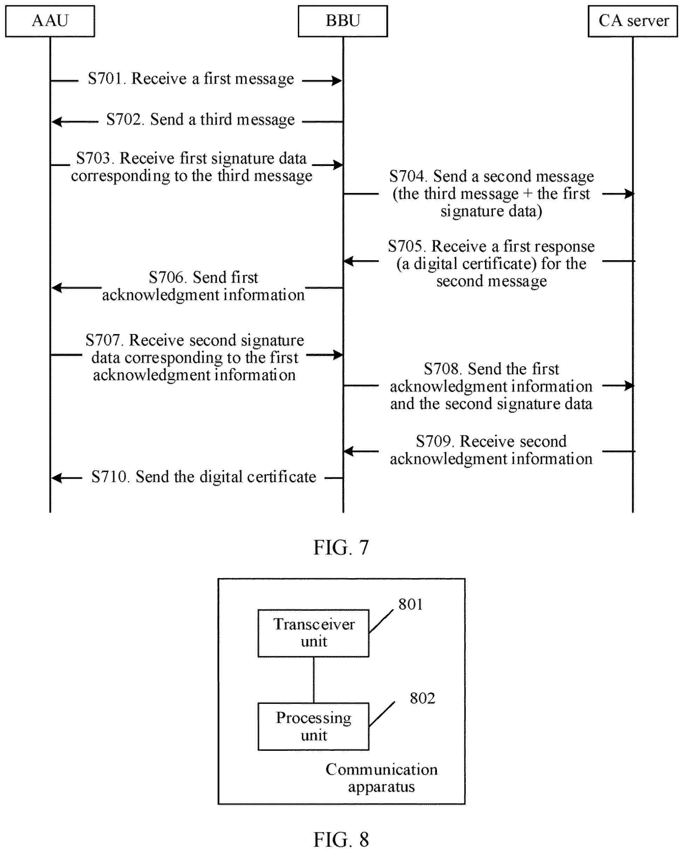

According to a fifteenth aspect, this application provides a communication apparatus. The apparatus may be a CA server, and the communication apparatus includes a processor, a transceiver, and a memory in FIG. 8. The processor, the transceiver, and the memory are coupled. The processor and the transceiver are configured to implement the method according to any one of the possible implementations of the third aspect.

According to a sixteenth aspect, this application provides a computer-readable storage medium. The storage medium stores a computer program or instructions, and when the computer program or the instructions are executed by a computer, the method according to any one of the first aspect to the third aspect is implemented.

According to a seventeenth aspect, this application provides a computer program product including instructions. The computer program product includes computer program code, and when the computer program code is run on a computer, the method according to any one of the first aspect to the third aspect is implemented.

### BRIEF DESCRIPTION OF DRAWINGS

FIG. 1 is a schematic of a network architecture of a 5G system;
FIG. 2 is a schematic of a network architecture between a base station and a CA server;
FIG. 3 is a diagram of an application scenario of a communication method according to an embodiment of this application;
FIG. 4 is a schematic flowchart of a communication method according to an embodiment of this application;
FIG. 5 is a diagram of a scenario of integrity protection according to an embodiment of this application;
FIG. 6 is another schematic flowchart of a communication method according to an embodiment of this application;
FIG. 7 is another schematic flowchart of a communication method according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of another communication apparatus according to an embodiment of this application; and
FIG. 11 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, a term such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

The technical solutions in embodiments of this application may be applied to various communication systems such as an enhanced long term evolution (enhanced long term evolution, eLTE) system, a 5th generation (5th generation, 5G) system, and a new radio (new radio, NR). A 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (Internet of Things, IoT) communication system, or another communication system. This is not limited herein.

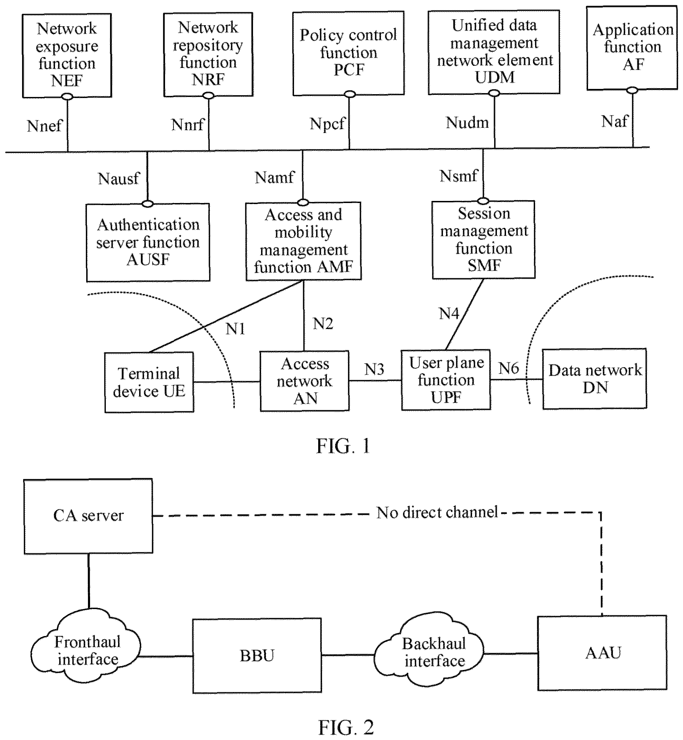

For ease of understanding, a 5G system is used as an example for description. FIG. 1 is a schematic of a network architecture of a 5G system. As shown in FIG. 1, the network architecture may include a terminal device, a (radio) access network ((radio) access network, (R) AN), a core network (core network, CN), and a data network (data network, DN). The (R) AN (described as a RAN below) is configured to connect the terminal device to a wireless network, and the CN is configured to manage the terminal device and provide a gateway for communicating with the DN.

The terminal device may be a device having a wireless transceiver function. The terminal device may have different names, for example, a terminal, user equipment (user equipment, UE), an access terminal, a terminal unit, a terminal station, a mobile station, a remote station, a remote terminal, a mobile device, a wireless communication device, a terminal agent, or a terminal apparatus. The terminal device may be deployed on land, including an indoor device, an outdoor device, a handheld device, or vehicle-mounted device, may be deployed on a water surface (for example, a ship), or may be deployed in the air (for example, on an airplane, a balloon, or a satellite). The terminal device includes a handheld device, a vehicle-mounted device, a wearable device, or a computing device having a wireless communication function. For example, the terminal device may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus, for example, a chip system, that can support the terminal device in implementing the function. In embodiments of this application, the chip system may include a chip, or may include a chip and another discrete device. In embodiments of this application, an example in which the apparatus configured to implement the function of the terminal device is the terminal device is used to describe the technical solutions provided in embodiments of this application.

An access network device may also be referred to as a base station. The base station may include base stations in various forms, such as a macro base station, a micro base station (also referred to as a small cell), a relay station, and an access point. Specifically, the base station may be an access point (access point, AP) in a wireless local area network (wireless local area network, WLAN), a base transceiver station (Base Transceiver Station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNB or eNodeB) in LTE, a relay station, an access point, a vehicle-mounted device, a wearable device, a next generation NodeB (next generation NodeB, gNB) in a future 5G network, a base station in a future evolved public land mobile network (public land mobile network, PLMN), or the like.

The base station usually includes a baseband unit (baseband unit, BBU), a remote radio unit (remote radio unit, RRU), an antenna, and a feeder used to connect the RRU and the antenna. The BBU is configured to perform signal modulation. The RRU is configured to perform radio frequency processing. The antenna is configured to perform conversion between a guided wave on a cable and a space wave in the air. On the one hand, a distributed base station greatly shortens a length of the feeder between the RRU and the antenna. This can reduce signal loss, and reduce costs of the feeder. On the other hand, the RRU and the antenna are small and can be installed anywhere, so that network planning is more flexible. The RRU may be remotely placed. In addition to that, all BBUs may be centralized and placed in a central office (central office, CO). In this centralized manner, a quantity of base station equipment rooms can be greatly reduced, energy consumption of auxiliary devices, especially air conditioners, can be reduced, and carbon emission can be greatly reduced. In addition, distributed BBUs can be centrally managed and scheduled after centralized to form a BBU baseband pool, so that resource allocation is more flexible. In this mode, all physical base stations evolve into virtual base stations. All the virtual base stations share information such as user data transmission and reception and channel quality in the BBU baseband pool, and cooperate with each other to implement joint scheduling.

In some deployments, the base station may include a central unit (central unit, CU) and a distributed unit (distributed unit, DU). The base station may further include an active antenna unit (active antenna unit, AAU). The CU implements some functions of the base station, and the DU implements some functions of the base station. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC for short) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in this architecture, higher layer signaling, for example, RRC layer signaling or PDCP layer signaling, may also be considered as being sent by the DU or sent by the DU and the AAU. It may be understood that, in embodiments of this application, the access network device may be a device including one or more of a CU node, a DU node, and an AAU node. In addition, the CU may be classified as a network device in the RAN, or the CU may be classified as a network device in the core network (core network, CN). This is not limited herein.

A core network device is configured to implement functions such as mobility management, data processing, session management, policy, and charging. Names of devices that implement core network functions in systems of different access technologies may be different. This is not limited in this application. A 5G network is used as an example. Logical network elements of 5GC include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The DN may also be referred to as a packet data network (packet data network, PDN), and is a network located outside an operator network. The operator network may access a plurality of DNs. Application servers corresponding to a plurality of services may be deployed in the DN, to provide a plurality of possible services for the terminal device.

In FIG. 1, Npcf, Nudm, Naf, Namf, Nsmf, N1, N2, N3, N4, and N6 are interface sequence numbers. For meanings of these interface sequence numbers, refer to meanings defined in related standard protocols. This is not limited herein.

It should be noted that, in the following embodiments of this application, a first device may be understood as a network element having a function of an active antenna unit (active antenna unit, AAU) or a radio unit (radio unit, RU), and a second device may be understood as a network element having a function of a baseband unit (baseband unit, BBU). Alternatively, these network elements may be referred to as other names. This is not limited herein. For ease of understanding, an example in which the first device is an AAU and the second device is a BBU is used for description in the following embodiments of this application.

The following explains and describes related technical features in embodiments of this application. It should be noted that these explanations are intended to facilitate understanding of embodiments of this application, but should not be considered as a limitation on the protection scope claimed in this application.

### 1. Digital certificate

The digital certificate is a data structure that is signed by a certificate authority (certificate authority, CA) server, and includes information about an owner of a public key, the public key, information about an issuer, a validity period, and extension information. The digital certificate is widely used to ensure confidentiality of data transmission, integrity of data exchange, non-repudiation of sending information, and certainty of identities of data exchange objects. A digital certificate of the AAU in embodiments of this application is a digital certificate on the AAU used to establish a secure channel between the AAU and the BBU.

### 2. Public key and private key

In an asymmetric encryption technology, there are two types of keys: a private key and a public key. The private key is held by a key pair owner and cannot be published. The public key is published by a key pair holder to another person. Usually, the public key is used to encrypt data, and the private key is used to decrypt the data encrypted by the public key.

### 3. Digest

Hash (HASH) calculation is performed on a text that needs to be transmitted, to obtain a digest corresponding to the text.

### 4. Signature

A signature is also referred to as signature data or a digital signature. Usually, a private key is used to encrypt a digest of a text that needs to be transmitted, and an obtained ciphertext is referred to as a signature of a current transmission process.

### 5. Integrity protection/check

The integrity protection/check is used to determine whether content of a message is modified in a transmission process, and may also be used for identity verification to determine a source of the message. Specifically, a data receiving end receives a transmitted text, and needs to determine whether the text is content sent by a data transmitting end, in other words, determine whether the text is tampered with in the transmission process. Therefore, the data receiving end needs to decrypt a signature based on a public key, to obtain a digest of the text, then use a HASH algorithm that is the same as that used by the transmitting end to calculate a digest value, and compare the digest value with the decrypted digest of the text. If the digest value and the decrypted digest of the text are completely consistent, it indicates that the text is not tampered with.

It should be noted that, as an Ethernet link is used between the AAU and the BBU, the AAU and the BBU need to use a certificate to implement secure eCPRI communication. However, because there is no direct channel between the AAU and the CA server, the AAU cannot update or manage the certificate. For example, FIG. 2 is a schematic of a network architecture between a base station and a CA server. As shown in FIG. 2, in a 5G communication system, a base station includes an AAU and a BBU. An interface between the BBU and the AAU is referred to as a fronthaul interface, for example, may be a common public radio interface (common public radio interface, CPRI) or an enhanced common public radio interface (enhanced common public radio interface, eCPRI). An interface between the BBU and the CA server is referred to as a backhaul interface. Because there is no direct channel between the AAU and the CA server, the AAU cannot apply for/update a certificate from the CA server online.

In view of this, embodiments of this application provide a communication method, to implement online update/management of a digital certificate.

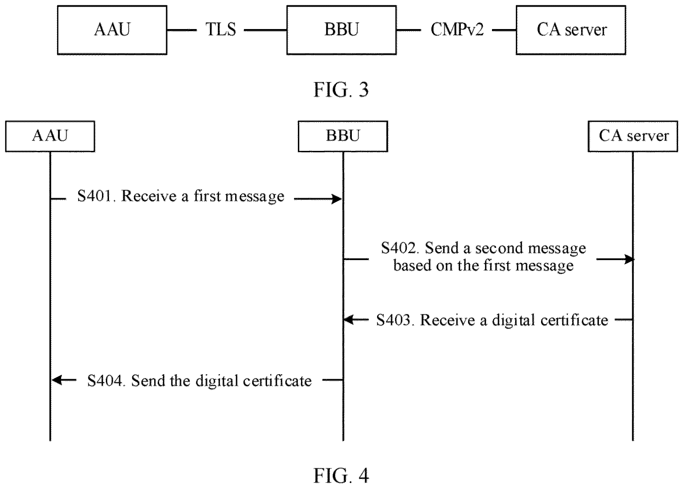

For example, FIG. 3 is a diagram of an application scenario of a communication method according to an embodiment of this application. As shown in FIG. 3, to prevent a security attack on an eCRPI channel between an AAU and a BBU, in this embodiment of this application, a transport layer security (transport layer security, TLS) technology is used to implement transport layer security protection between the BBU and the AAU. In other words, data transmission between the AAU and the BBU may be implemented by using the TLS technology, or data transmission between the AAU and the BBU is implemented by using a TLS channel. The BBU communicates with a CA server by using a certificate management protocol version 2 (certificate management protocol version 2, CMPv2) protocol.

The following describes in detail the communication method and a communication apparatus that are provided in this application.

FIG. 4 is a schematic flowchart of a communication method according to an embodiment of this application. As shown in FIG. 4, the communication method includes the following steps S401 to S403.

S401. A BBU receives a first message from an AAU.

In some feasible implementations, the AAU generates a key pair and a certificate request file (certificate request file) that are needed for applying for a digital certificate. Usually, the certificate request file is a data file that includes some information for applying for a certificate from a CA server, and includes information such as information about a public key of the AAU, applicant information, and a domain name. The information about the public key of the AAU may be the public key of the AAU, obtaining information of the public key of the AAU, or the like. This is not limited herein. In other words, the certificate request file may be used to apply for the digital certificate of the AAU. The AAU may send the first message to the BBU, where the first message includes the certificate request file. Correspondingly, the BBU receives the first message from the AAU. In addition to the certificate request file, the first message may further include some other data related to a certificate request. For details, refer to definitions in the RFC4211 protocol. The details are not described herein.

It should be noted that, that the AAU sends the first message to the BBU may be understood as sending the first message to the BBU through a transport layer security (transport layer security, TLS) channel. Correspondingly, the BBU receives the first message from the AAU through the TLS channel. Usually, during production of the AAU and the BBU, a certificate of at least one device manufacturer may be built in each of the AAU and the BBU by a device manufacturer of each of the AAU and the BBU as an identity credential of each of the AAU and the BBU. In this embodiment of this application, the certificate built in the AAU by the device manufacturer of the AAU is referred to as an AAU vendor preset certificate or an AAU device certificate. The certificate built in the BBU by the device manufacturer of the BBU is referred to as a BBU vendor preset certificate or a BBU device certificate. For ease of description, the AAU vendor preset certificate and the BBU vendor preset certificate may be collectively referred to as a vendor preset certificate (Vendor certificate). A secure channel (or described as the TLS channel) may be established between the AAU and the BBU based on the vendor preset certificate. To be specific, the AAU device certificate is used to establish the secure channel between the AAU and the BBU. The BBU device certificate is used to establish the secure channel between the AAU and the BBU. In addition, the BBU device certificate may be further used to establish a secure channel to the CA. In this embodiment of this application, a manner of establishing the secure channel or the TLS channel between the AAU and the BBU based on the vendor preset certificate may be based on a manner defined in the TLS1.2 and TLS1.3 protocols. Details are not described herein.

It may be understood that, after the secure channel is established between the AAU and the BBU, the AAU may communicate with the BBU through the established secure channel. For example, the AAU sends the first message to the BBU through the established secure channel. The first message includes the certificate request file. It should be noted that, that the BBU receives the first message from the AAU is equivalent to that the AAU authorizes the BBU to act as a proxy for the AAU to complete CMPv2 protocol interaction with the CA server to apply for the digital certificate, and transfers the digital certificate obtained through the application to the AAU. For a detailed process, refer to descriptions of the following steps.

S402. The BBU sends a second message to the certificate authority CA server based on the first message.

In some feasible implementations, the BBU sends the second message to the certificate authority CA server based on the first message. The second message includes the certificate request file. Specifically, sending the second message to the CA server based on the first message may be understood as that the BBU sends a third message to the AAU, where the third message includes the certificate request file; the BBU receives, from the AAU, first signature data corresponding to the third message; and the BBU sends the second message to the CA server, where the second message includes the first signature data and the third message. In other words, after the AAU sends the first message including the certificate request file to the BBU, the BBU may generate the third message based on the first message, and send the third message to the AAU for signing. Further, the BBU receives, from the AAU, the first signature data corresponding to the third message, combines the third message and the first signature data, to generate the second message and send the second message to the CA server. In other words, the BBU may send the third message and the first signature data corresponding to the third message to the CA server.

Usually, the AAU may sign the third message based on a private key of the AAU, and send the first signature data obtained through the signing to the BBU. Further, the BBU sends a signed message (namely, the second message) to the CA server according to a CMPv2 protocol. The third message may also be understood as a certificate request message or a certificate management protocol (certificate management protocol, CMP) initialization request (initialization request, IR) message. In addition to the certificate request file, the third message may further include other content. For details, refer to definitions in the RFC4211 protocol and an RFC4210 protocol. The details are not described herein.

The following describes a process in which the AAU signs the third message based on the private key and a process in which the CA server performs integrity check on the third message based on the third message and the first signature data.

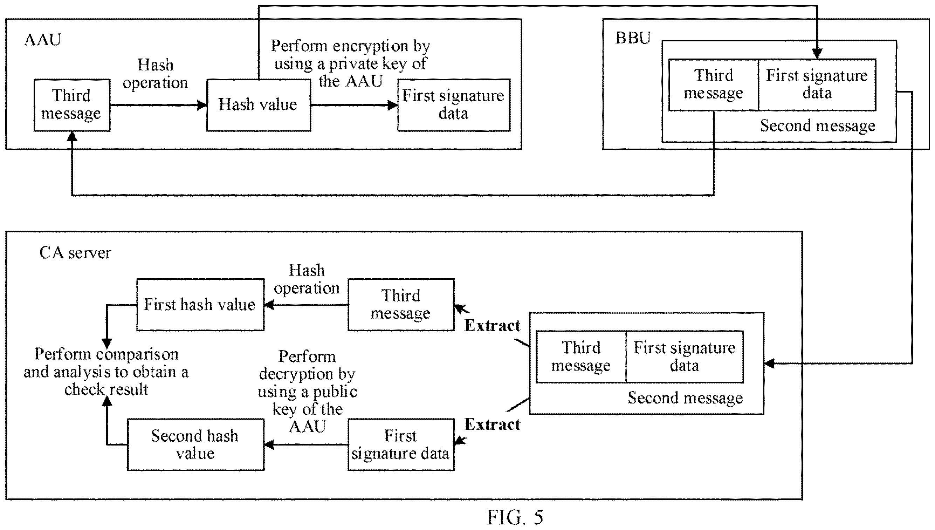

For example, FIG. 5 is a diagram of a scenario of integrity protection according to an embodiment of this application. Usually, after receiving the third message, the AAU may perform a hash operation on the third message based on a hash algorithm, to obtain a corresponding hash value, and then encrypt the generated hash value by using the private key of the AAU, to obtain the first signature data. Then, the AAU sends the first signature data to the BBU. After receiving the first signature data from the AAU, the BBU may combine the third message and the first signature data, and send data obtained through the combination (namely, the second message) to the CA server. It should be noted that, when receiving the second message sent by the BBU, the CA server first parses the received second message, to obtain the third message and first signature data obtained through separation. Then, the first signature data is decrypted based on the public key of the AAU, to obtain a decrypted hash value (simply referred to as a first hash value below) corresponding to the third message. In addition, the hash operation is performed, based on the hash algorithm, on content included in the third message obtained through the separation, to obtain a hash value (simply referred to as a second hash value below) corresponding to the third message. Finally, the CA server may obtain a check result of the third message by comparing and analyzing the first hash value and the second hash value. Usually, when the first hash value is equal to the second hash value, the CA server may determine that the third message is not tampered with in a transmission process. When the first hash value is not equal to the second hash value, the CA server may determine that the third message is maliciously tampered with in a transmission process. Usually, when determining that the second message is tampered with in the transmission process, the CA server may refuse to issue the digital certificate to the AAU. When determining that the second message is not tampered with in the transmission process, the CA server may feed back, based on the second message, the digital certificate corresponding to the AAU to the BBU.

S403. The BBU receives the digital certificate from the CA server.

In some feasible implementations, the BBU receives the digital certificate from the CA server. It may be understood that, that the BBU receives the digital certificate from the CA server may be understood as that the BBU receives a first response from the CA server for the second message, where the first response includes the digital certificate. The first response may also be described as a CMP initialization response (initialization response, IP). In addition to the digital certificate, the first response may further include some other content. For specific content included in the first response, refer to definitions in the RFC4211 protocol and the RFC4210 protocol. Details are not described herein.

Usually, when sending the first response to the BBU, the CA server may further send signature data of the first response to the BBU. In other words, the first response may further carry the signature data of the first response, and the CA server sends the first response and the signature data of the first response to the BBU. The signature data of the first response is signature data obtained by signing a digest of the first response by the CA server based on a private key of the CA server.

S404. The BBU sends the digital certificate to the AAU.

In some feasible implementations, after receiving the digital certificate from the CA server, the BBU may send the received digital certificate to the AAU. Specifically, after receiving the first response from the CA server for the second message and the signature data of the first response, the BBU may check the signature data of the first response based on a public key of the CA. When a check result of checking the first response based on the public key of the CA and the signature data of the first response is that the check succeeds, the BBU sends the digital certificate to the AAU. Further, the BBU may send first acknowledgment information to the AAU when the check result of checking the first response based on the signature data of the first response is that the check succeeds. The first acknowledgment information may be understood as a Cert Confirm message in the certificate management protocol version 2 (certificate management protocol version 2, CMPv2) protocol. After receiving the first acknowledgment information, the AAU may sign a digest of the first acknowledgment information based on the private key of the AAU, to obtain second signature data corresponding to the first acknowledgment information, and send the second signature data to the BBU. Correspondingly, after receiving the second signature data from the AAU, the BBU may send the first acknowledgment information and the second signature data to the CA server. After signature verification performed by the CA server on the first acknowledgment information based on the second signature data succeeds, the CA server may feed back second acknowledgment information to the BBU. The second acknowledgment information may be a public key infrastructure (public key infrastructure, PKI) Confirm message in the CMPv2 protocol, and may be specifically understood as acknowledgment information fed back by the CA server after the CA server successfully receives the first acknowledgment information. For specific content included in the second acknowledgment information, refer to definitions in the RFC4211 protocol and the RFC4210 protocol. Details are not described herein.

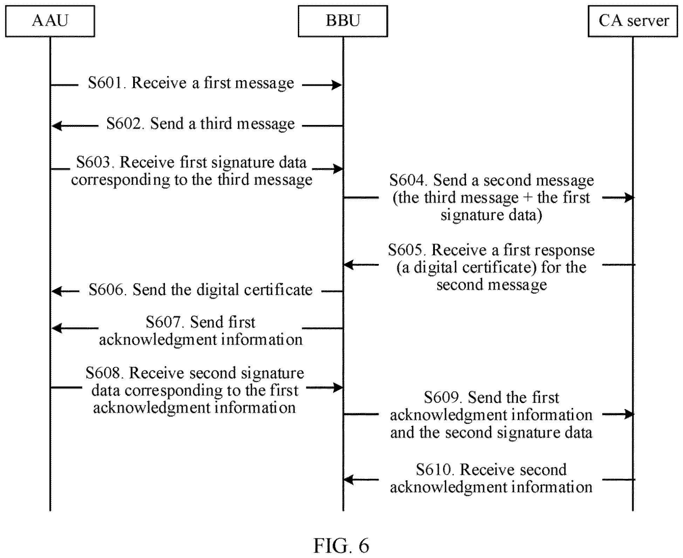

For example, FIG. 6 is another schematic flowchart of a communication method according to an embodiment of this application. The method includes the following steps. S601. A BBU receives a first message from an AAU. The first message includes a certificate request file. S602. The BBU sends a third message to the AAU. Usually, the BBU may generate the third message based on the certificate request file in the first message, and send the third message to the AAU for signing. S603. The BBU receives, from the AAU, first signature data corresponding to the third message. The AAU may sign a digest of the third message based on a private key of the AAU, to generate the first signature data and feed back the first signature data to the BBU. S604. The BBU sends a second message to a CA server. After receiving the first signature data, the BBU may combine the third message and the first signature data, and send the second message obtained through the combination to the CA server. In other words, the second message includes the third message and the first signature data. S605. Receive a first response from the CA server for the second message. The first response includes a digital certificate issued by the CA server to the AAU. Usually, after the CA server receives the second message, and integrity check performed on the third message by using the first signature data succeeds, the CA server may send the first response to the BBU. The first response includes the digital certificate issued by the CA server to the AAU. Usually, the first response further carries signature data obtained by signing a digest of the first response by the CA server based on a private key of the CA server. That is, the first response carries the signature data corresponding to the first response. S606. The BBU sends the digital certificate to the AAU. After the BBU receives the first response, and integrity check performed on the first response by using the signature data of the first response succeeds, the BBU may send the digital certificate included in the first response to the AAU. S607. The BBU sends first acknowledgment information to the AAU. The BBU sends the first acknowledgment information that needs to be signed by the AAU to the AAU. S608. The BBU receives second signature data from the AAU for the first acknowledgment information. After signing a digest of the first acknowledgment information based on the private key of the AAU, the AAU may feed back the obtained second signature data to the BBU. S609. The BBU sends the first acknowledgment information and the second signature data to the CA server. After combining the first acknowledgment information and the second signature data, the BBU may send information obtained through the combination to the CA server. S610. The BBU receives second acknowledgment information from the CA server. After integrity check performed on the first acknowledgment information based on the second signature data succeeds, the CA server may return the second acknowledgment information to the BBU. Usually, the second acknowledgment information may carry signature data obtained by signing a digest of the second acknowledgment information by the CA server based on the private key of the CA server.

Optionally, in some feasible implementations, that the BBU sends the digital certificate to the AAU may be further understood as sending the digital certificate to the AAU in response to the second acknowledgment information. In other words, after receiving the digital certificate from the CA server, the BBU may further send the first acknowledgment information to the AAU when a check result of checking the first response based on the signature data of the first response is that the check succeeds. The first acknowledgment information may be understood as a Cert Confirm message in a CMPv2 protocol. After receiving the first acknowledgment information, the AAU may sign the digest of the first acknowledgment information based on the private key of the AAU, to obtain the second signature data corresponding to the first acknowledgment information, and send the second signature data to the BBU. Correspondingly, after receiving the second signature data from the AAU, the BBU may send the first acknowledgment information and the second signature data to the CA server. After signature verification performed by the CA server on the first acknowledgment information based on the second signature data succeeds, the CA server may feed back the second acknowledgment information to the BBU. The second acknowledgment information may be understood as a PKI Confirm message in the CMPv2 protocol. After receiving the second acknowledgment information from the CA server for the first acknowledgment information, the BBU sends the digital certificate to the AAU. Usually, the second acknowledgment information may further carry the signature data obtained by signing the digest of the second acknowledgment information by the CA server. For ease of description, the signature data is simply referred to as third signature data below. After the BBU receives the second acknowledgment information and the third signature data from the CA server, if a check result of integrity check performed on the second acknowledgment information based on the third signature data is that the check succeeds, the BBU sends the digital certificate to the AAU.

For example, FIG. 7 is another schematic flowchart of a communication method according to an embodiment of this application. Details are shown in FIG. 7. S701. A BBU receives a first message from an AAU. The first message includes a certificate request file. S702. The BBU sends a third message to the AAU. Usually, the BBU may generate the third message based on the certificate request file in the first message, and send the third message to the AAU for signing. S703. The BBU receives, from the AAU, first signature data corresponding to the third message. The AAU may sign a digest of the third message based on a private key of the AAU, to generate the first signature data and feed back the first signature data to the BBU. S704. The BBU sends a second message to a CA server. After receiving the first signature data, the BBU may combine the third message and the first signature data, and send the second message obtained through the combination to the CA server. In other words, the second message includes the third message and the first signature data. S705. Receive a first response from the CA server for the second message. The first response includes a digital certificate issued by the CA server to the AAU. Usually, after the CA server receives the second message, and integrity check performed on the third message by using the first signature data succeeds, the CA server may send the first response to the BBU. The first response includes the digital certificate issued by the CA server to the AAU. Usually, the first response further carries signature data obtained by signing a digest of the first response by the CA server based on a private key of the CA server. That is, the first response carries the signature data corresponding to the first response. S706. The BBU sends first acknowledgment information to the AAU. The BBU sends the first acknowledgment information that needs to be signed by the AAU to the AAU. S707. The BBU receives second signature data from the AAU for the first acknowledgment information. After signing a digest of the first acknowledgment information based on the private key of the AAU, the AAU may feed back the obtained second signature data to the BBU. S708. The BBU sends the first acknowledgment information and the second signature data to the CA server. After combining the first acknowledgment information and the second signature data, the BBU may send information obtained through the combination to the CA server. S709. The BBU receives second acknowledgment information from the CA server. After integrity check performed on the first acknowledgment information based on the second signature data succeeds, the CA server may return the second acknowledgment information to the BBU. Usually, the second acknowledgment information may carry signature data obtained by signing a digest of the second acknowledgment information by the CA server based on the private key of the CA server. S710. The BBU sends the digital certificate to the AAU. After the BBU receives the second acknowledgment information, and integrity check performed on the second acknowledgment information based on the signature data (namely, third signature data) of the second acknowledgment information succeeds, the BBU sends the digital certificate to the AAU.

It should be noted that an occasion at which the BBU receives the digital certificate from the CA server and sends the digital certificate to the AAU may alternatively be determined based on an actual scenario. This is not limited herein. The digital certificate of the AAU may be an operator device certificate or the like. This is not limited herein.

It may be understood that, after the BBU acts as a proxy for the AAU to complete digital certificate application, a proxy application channel between the AAU and the BBU may be closed. The AAU may establish a service connection to the BBU by using the obtained digital certificate.

The following describes in detail the communication apparatus provided in this application with reference to FIG. 8 to FIG. 11.

FIG. 8 is a diagram of a structure of a communication apparatus according to an embodiment of this application. The communication apparatus shown in FIG. 8 may be configured to perform a part or all of functions of the second device in the method embodiments described in FIG. 4 to FIG. 7. The apparatus may be a second device, an apparatus in a second device, or an apparatus that can be used together with a second device. Alternatively, the communication apparatus may be a chip system. The communication apparatus shown in FIG. 8 may include a transceiver unit 801 and a processing unit 802. The processing unit 802 is configured to perform data processing. The transceiver unit 801 is integrated with a receiving unit and a sending unit. The transceiver unit 801 may also be referred to as a communication unit. Alternatively, the transceiver unit 801 may be split into a receiving unit and a sending unit. The processing unit 802 below is similar to the transceiver unit 801. Details are not described below again.

The transceiver unit 801 is configured to receive a first message from a first device, where the first message includes a certificate request file, and the certificate request file is used to apply for a digital certificate of the first device.

The processing unit 802 is configured to send, based on the first message, a second message to a certificate authority CA server via the transceiver unit 801, where the second message includes the certificate request file.

The transceiver unit 801 is configured to receive the digital certificate from the CA server.

The transceiver unit 801 is configured to send the digital certificate to the first device.

In a possible implementation, the processing unit 802 is specifically configured to:
send a third message to the first device via the transceiver unit 801, where the third message includes the certificate request file;
receive, from the first device via the transceiver unit 801, first signature data corresponding to the third message; and
send the second message to the CA server via the transceiver unit 801, where the second message includes the first signature data and the third message.

In a possible implementation, the transceiver unit 801 is specifically configured to:
receive a first response from the CA server for the second message, where the first response includes the digital certificate.

In a possible implementation, the first response carries signature data of the first response, and the transceiver unit 801 is specifically configured to:
send first acknowledgment information to the CA server based on a check result of checking the first response based on the signature data of the first response;
receive second acknowledgment information from the CA server for the first acknowledgment information; and
send the digital certificate to the first device in response to the second acknowledgment information.

In a possible implementation, the transceiver unit 801 is specifically configured to:
when the check result is that the check succeeds, send the first acknowledgment information to the first device;
receive, from the first device, second signature data corresponding to the first acknowledgment information; and
send the first acknowledgment information and the second signature data to the CA server.

For another possible implementation of the communication apparatus, refer to related descriptions of functions of the access network device in the method embodiments corresponding to FIG. 4 to FIG. 7. Details are not described herein again.

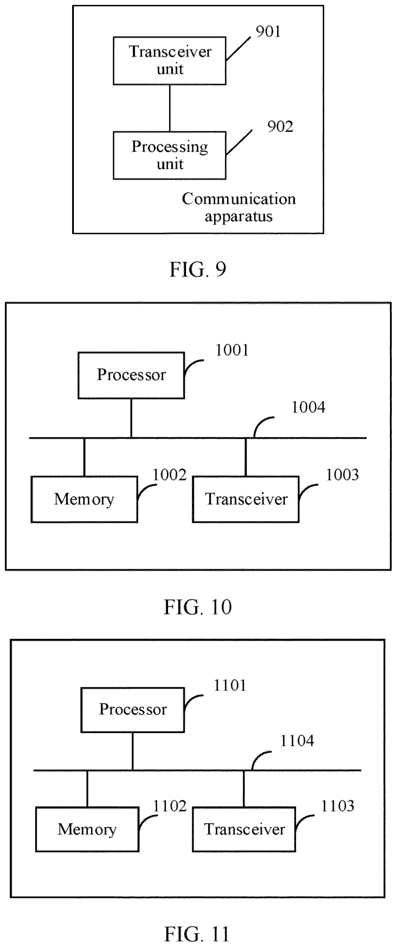

FIG. 9 is a diagram of a structure of another communication apparatus according to an embodiment of this application. The communication apparatus shown in FIG. 9 may be configured to perform a part or all of functions of the first device in the method embodiments described in FIG. 4 to FIG. 7. The apparatus may be a first device, an apparatus in a first device, or an apparatus that can be used together with a first device. Alternatively, the communication apparatus may be a chip system. The communication apparatus shown in FIG. 9 may include a transceiver unit 901 and a processing unit 902.

The transceiver unit 901 is configured to send a first message to a second device, where the first message includes a certificate request file, and the certificate request file is used to apply for a digital certificate of the first device.

The transceiver unit 901 is configured to receive the digital certificate from the second device.

In a possible implementation, the transceiver unit 901 is configured to receive a third message from the second device, where the third message includes the certificate request file.

The apparatus further includes:
the processing unit 902, configured to send first signature data corresponding to the third message to the second device via the transceiver unit 901.

In a possible implementation, the transceiver unit 901 is specifically configured to:
receive first acknowledgment information from the second device; and
send second signature data corresponding to the first acknowledgment information to the second device.

For another possible implementation of the communication apparatus, refer to related descriptions of functions of the access network device in the method embodiments corresponding to FIG. 4 to FIG. 7. Details are not described herein again.

FIG. 10 is a diagram of a structure of another communication apparatus according to an embodiment of this application. The communication apparatus may be the second device in embodiments of this application. As shown in FIG. 10, a second device in this embodiment may include one or more processors 1001, a memory 1002, and a transceiver 1003. The processor 1001, the memory 1002, and the transceiver 1003 are connected by using a bus 1004. The memory 1002 is configured to store a computer program. The computer program includes program instructions. The processor 1001 and the transceiver 1003 are configured to execute the program instructions stored in the memory 1002, to implement functions of the second device in FIG. 4 to FIG. 7.

It should be understood that, in some feasible implementations, the processor 1001 may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like. The memory 1002 may include a read-only memory and a random access memory, and provide instructions and data for the processor 1001. A part of the memory 1002 may further include a non-volatile random access memory. For example, the memory 1002 may further store information about a device type.

FIG. 11 is a diagram of a structure of another communication apparatus according to an embodiment of this application. The communication apparatus may be the first device in embodiments of this application. As shown in FIG. 11, a first device in this embodiment may include one or more processors 1101, a memory 1102, and a transceiver 1103. The processor 1101, the memory 1102, and the transceiver 1103 are connected by using a bus 1104. The memory 1102 is configured to store a computer program. The computer program includes program instructions. The processor 1101 and the transceiver 1103 are configured to execute the program instructions stored in the memory 1102, to implement functions of the first device in FIG. 4 to FIG. 7.

It should be understood that, in some feasible implementations, the processor 1101 may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like. The memory 1102 may include a read-only memory and a random access memory, and provide instructions and data for the processor 1101. A part of the memory 1102 may further include a non-volatile random access memory. For example, the memory 1102 may further store information about a device type.

An embodiment of this application further provides a computer-readable storage medium. The computer-readable storage medium stores instructions, and when the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, units and steps of examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the described apparatus embodiments are merely examples. For example, division into the units is merely logical function division. The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The computer-readable storage medium may be any usable medium that can be accessed by a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another compact disc storage, a magnetic disk storage medium or another magnetic storage device, or any other medium that can be used to carry or store expected program code in a form of instructions or a data structure and that can be accessed by a computer. In addition, by way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving a first message from a first device, wherein the first message comprises a certificate request file, and the certificate request file is used to apply for a digital certificate of the first device;
sending a second message to a certificate authority CA server based on the first message, wherein the second message comprises the certificate request file;
receiving the digital certificate from the CA server; and
sending the digital certificate to the first device.

2. The method according to claim 1, wherein the sending a second message to a CA server based on the first message comprises:
sending a third message to the first device, wherein the third message comprises the certificate request file;
receiving, from the first device, first signature data corresponding to the third message; and
sending the second message to the CA server, wherein the second message comprises the first signature data and the third message.

3. The method according to claim 1 or 2, wherein the receiving the digital certificate from the CA server comprises:
receiving a first response from the CA server for the second message, wherein the first response comprises the digital certificate.

4. The method according to claim 3, wherein the first response carries signature data of the first response, and the sending the digital certificate to the first device comprises:
sending first acknowledgment information to the CA server based on a check result of checking the first response based on the signature data of the first response;
receiving second acknowledgment information from the CA server for the first acknowledgment information; and
sending the digital certificate to the first device in response to the second acknowledgment information.

5. The method according to claim 4, wherein the sending first acknowledgment information to the CA server based on a check result of checking the first response based on the signature data of the first response comprises:
when the check result is that the check succeeds, sending the first acknowledgment information to the first device;
receiving, from the first device, second signature data corresponding to the first acknowledgment information; and
sending the first acknowledgment information and the second signature data to the CA server.

6. A communication method, comprising:
sending a first message to a second device, wherein the first message comprises a certificate request file, and the certificate request file is used to apply for a digital certificate of a first device; and
receiving the digital certificate from the second device.

7. The method according to claim 6, wherein the method further comprises:
receiving a third message from the second device, wherein the third message comprises the certificate request file; and
sending first signature data corresponding to the third message to the second device.

8. The method according to claim 6 or 7, wherein the method further comprises:
receiving first acknowledgment information from the second device; and
sending second signature data corresponding to the first acknowledgment information to the second device.

9. A communication apparatus, wherein the communication apparatus is a second device, and comprises:
a transceiver unit, configured to receive a first message from a first device, wherein the first message comprises a certificate request file, and the certificate request file is used to apply for a digital certificate of the first device; and
a processing unit, configured to send, based on the first message, a second message to a certificate authority CA server via the transceiver unit, wherein the second message comprises the certificate request file, wherein
the transceiver unit is configured to receive the digital certificate from the CA server; and
the transceiver unit is configured to send the digital certificate to the first device.

10. The apparatus according to claim 9, wherein the processing unit is specifically configured to:
send a third message to the first device via the transceiver unit, wherein the third message comprises the certificate request file;
receive, from the first device via the transceiver unit, first signature data corresponding to the third message; and
send the second message to the CA server via the transceiver unit, wherein the second message comprises the first signature data and the third message.

11. The apparatus according to claim 9 or 10, wherein the transceiver unit is specifically configured to:
receive a first response from the CA server for the second message, wherein the first response comprises the digital certificate.

12. The apparatus according to claim 11, wherein the first response carries signature data of the first response, and the transceiver unit is specifically configured to:
send first acknowledgment information to the CA server based on a check result of checking the first response based on the signature data of the first response;
receive second acknowledgment information from the CA server for the first acknowledgment information; and
send the digital certificate to the first device in response to the second acknowledgment information.

13. The apparatus according to claim 12, wherein the transceiver unit is specifically configured to:
when the check result is that the check succeeds, send the first acknowledgment information to the first device;
receive, from the first device, second signature data corresponding to the first acknowledgment information; and
send the first acknowledgment information and the second signature data to the CA server

14. A communication apparatus, wherein the communication apparatus is a first device, and comprises:
a transceiver unit, configured to send a first message to a second device, wherein the first message comprises a certificate request file, and the certificate request file is used to apply for a digital certificate of the first device, wherein
the transceiver unit is configured to receive the digital certificate from the second device.

15. The apparatus according to claim 14, wherein the transceiver unit is configured to receive a third message from the second device, wherein the third message comprises the certificate request file; and
the apparatus further comprises:
a processing unit, configured to send first signature data corresponding to the third message to the second device via the transceiver unit.

16. The apparatus according to claim 14 or 15, wherein the transceiver unit is specifically configured to:
receive first acknowledgment information from the second device; and
send second signature data corresponding to the first acknowledgment information to the second device.

17. A communication apparatus, comprising a processor and a transceiver, wherein the processor and the transceiver are configured to execute a computer program or instructions stored in at least one memory, to enable the apparatus to implement the method according to any one of claims 1 to 5.

18. A communication apparatus, comprising a processor and a transceiver, wherein the processor and the transceiver are configured to execute a computer program or instructions stored in at least one memory, to enable the apparatus to implement the method according to any one of claims 6 to 8.

19. A computer-readable storage medium, wherein the storage medium stores a computer program or instructions, and when the computer program or the instructions are executed by a computer, the method according to any one of claims 1 to 5 is implemented.

20. A computer-readable storage medium, wherein the storage medium stores a computer program or instructions, and when the computer program or the instructions are executed by a computer, the method according to any one of claims 6 to 8 is implemented.

21. A computer program product, wherein the computer program product comprises computer program code, and when the computer program code is run on a computer, the method according to any one of claims 1 to 5 is implemented.

22. A computer program product, wherein the computer program product comprises computer program code, and when the computer program code is run on a computer, the method according to any one of claims 6 to 8 is implemented.
